# EUROPÄISCHE PATENTSCHRIFT

(11) **EP 3 688 251 B1**
(45) Veröffentlichungstag und Bekanntmachung des Hinweises auf die Patenterteilung: **03.11.2021**
(21) Anmeldenummer: 18786204.0
(22) Anmeldetag: 25.09.2018
(51) Int. Cl.: A63C 19/00, A63C 19/10, A63B 69/00, E04H 4/00

(54) **KÜNSTLICHE SURFANLAGE**
ARTIFICIAL SURFING FACILITY
INSTALLATION DE FORMATION DE VAGUES ARTIFICIELLES DE SURF

(30) Priorität: 25.09.2017 AT 600972017; 02.10.2017 AT 601032017; 29.01.2018 AT 600222018; 14.11.2017 AT 4452017
(43) Veröffentlichungstag der Anmeldung: 05.08.2020
(73) Patentinhaber: UpSurfDown GmbH, 1220 Wien (AT)
(72) Erfinder: HUBER, Boris, 1110 Wien (AT); STRÖMER, Michael, 8010 Graz (AT); STOCKINGER, Stefan, 1220 Wien (AT)
(74) Vertreter: Keschmann, Marc
(86) Internationale Anmeldenummer: PCT/AT2018/000079
(87) Internationale Veröffentlichungsnummer: WO 2019/056028

(56) Entgegenhaltungen:
- EP-A1- 2 356 298
- WO-A1-2005/033444
- WO-A1-2009/064445
- US-A1- 2009 185 863

## Beschreibung

Die Erfindung betrifft eine künstliche Surfanlage zur Erzeugung einer stehenden Welle umfassend einen Wasserkreislauf, in dem eine erste Wellenerzeugungsvorrichtung angeordnet ist, die ein Wellenbecken und eine dem Wellenbecken vorgeordnete Rampe umfasst, über welche das Wasser in das Wellenbecken hinabfließt, wobei der Wasserkreislauf flussabwärts des Wellenbeckens der ersten Wellenerzeugungsvorrichtung einen Wasserrücklauf aufweist, über welchen das Wasser einer Pumpe zur Verfügung gestellt wird, mit welcher das Wasser aus dem Rücklauf zu der ersten Wellenerzeugungsvorrichtung hinauf förderbar ist.

Künstliche Surfanlagen zur Erzeugung einer stehenden Welle sind beispielsweise aus der EP 2356298 B1 bekannt. Bei der bekannten Vorrichtung wird das Wasser in einem geschlossenen System im Kreislauf geführt, wobei das Wasser zuerst von einer Pumpe auf das Niveau des oberen Endes der Rampe der Wellenerzeugungsvorrichtung gefördert wird, die Rampe hinabfließt und im Wellenbecken eine stehende Welle bildet. Das aus dem Wellenbecken abfließende Wasser fließt über einen Rücklauf zum Ansaugbereich der Pumpe, sodass der Kreislauf von neuem beginnen kann. Bei der in der EP 2356298 B1 beschriebenen Ausbildung ist die Wellenerzeugungsvorrichtung einschließlich des Wellenbeckens in einem dieses umgebenden Hauptbecken angeordnet, sodass das aus dem Wellenbecken abfließende Wasser in das Hauptbecken gelangt. Im Hauptbecken fließt das Wasser unterhalb des Wellenbeckens zurück zum Ansaugbereich der Pumpe. Aus konstruktiven Gründen muss das Hauptbecken in einem relativ großen Abstand unterhalb des Wellenbeckens angeordnet sein, sodass das aus dem Wellenbecken abfließende Wasser über eine entsprechend große Fallhöhe geführt wird. Dabei wird die potentielle Energie des Wassers in kinetische Energie umgewandelt, die jedoch nicht sinnvoll nutzbar ist, sodass Energie gleichsam "verloren" geht. Nachteilig ist hierbei aber vor allem, dass das Wasser von dem Niveau des Hauptbeckens unter großem Energieeinsatz für die hierfür vorgesehene(n) Pumpe(n) wieder auf das Niveau des oberen Endes der Rampe angehoben werden muss. Auf Grund des Volumenstromes, der für den Betrieb einer künstlichen Surfanlage erforderlich ist, ist der Energieverbrauch der Pumpe(n) überaus groß und stellt einen bedeutenden Kostenfaktor dar. Der Volumenstrom selbst kann nicht ohne weiteres reduziert werden, ohne die Größe des Wellenbeckens und damit die Nutzungskapazität der künstlichen Surfanlage, d.h. die Anzahl der Surfer, welche die Anlage gleichzeitig benutzen können, zu verringern.

Die Erfindung zielt daher darauf ab, den Energieverbrauch für den Betrieb einer künstlichen Surfanlage im Verhältnis zur Nutzungskapazität zu reduzieren.

Zur Lösung dieser Aufgabe sieht die Erfindung bei einer künstlichen Surfanlage der eingangs genannten Art im Wesentlichen vor, dass im Rücklauf wenigstens eine weitere Wellenerzeugungsvorrichtung angeordnet ist, zu welcher das aus der ersten Wellenerzeugungsvorrichtung kommende Wasser fließt. Dadurch, dass das rücklaufende Wasser in wenigstens einer weiteren Wellenerzeugungsvorrichtung für die Bereitstellung einer stehenden Welle genutzt wird, kann die Nutzungskapazität der Gesamtanlage erhöht werden ohne dass der Energieeinsatz für den Betrieb der Pumpe(n) steigt. Insbesondere wird dadurch die sonst verloren gehende potentielle Energie des Wassers in der wenigstens einen weiteren Wellenerzeugungsvorrichtung genutzt. Die Förderung des die erste Wellenerzeugungsvorrichtung verlassenden Wassers zu der wenigstens einen weiteren Wellenerzeugungsvorrichtung erfolgt hierbei ausschließlich auf Grund der Strömung des sich im Kreislauf bewegenden Wassers, sodass keine zusätzlichen Pumpen erforderlich sind, welche das Wasser auf ein höheres Niveau bringen müssen. Das flussaufwärtige Ende der weiteren Wellenerzeugungsvorrichtung liegt somit auf einem niedrigeren Niveau als der Wasserstand am flussabwärtigen Ende der ersten Wellenerzeugungsvorrichtung.

Bevorzugt ist die Ausbildung so getroffen, dass die gesamte Wassermenge des Rücklaufs durch die wenigstens eine weitere Wellenerzeugungsvorrichtung geleitet wird.

Gemäß der Erfindung ist die künstliche Surfanlage derart ausgebildet, dass das Wasser im Wasserkreislauf zumindest zwei Wellenerzeugungsvorrichtungen nacheinander durchfließt. Es können zwei, drei oder mehrere Wellenerzeugungsvorrichtungen nacheinander von dem Wasser durchflossen werden, bis dieses in den Einsaugbereich der Pumpe(n) gelangt, welche das Wasser wieder zur ersten Wellenerzeugungsvorrichtung hinaufpumpt.

In bevorzugter Weise ist der Wasserkreislauf als geschlossener Kreislauf ausgebildet.

Eine besonders platzsparende Bauweise wird gemäß einer bevorzugten Ausbildung der Erfindung dadurch erreicht, dass der Wasserkreislauf zwischen der ersten Wellenerzeugungsvorrichtung und der wenigstens einen weiteren Wellenerzeugungsvorrichtung Umlenkmittel zur Umlenkung des Wassers um wenigstens 90°, insbesondere um ca. 180°, aufweist. In diesem Zusammenhang ist bevorzugt vorgesehen, dass die erste Wellenerzeugungsvorrichtung und die weitere Wellenerzeugungsvorrichtung nebeneinander angeordnet sind. Die Flussrichtung des Wassers in der ersten Wellenerzeugungsvorrichtung und in der weiteren Wellenerzeugungsvorrichtung ist hierbei entgegengesetzt gerichtet.

Wenn die erste und die weitere Wellenerzeugungsvorrichtung unmittelbar nebeneinander angeordnet sind, um eine besonders platzsparende Bauweise zu erreichen, ist bevorzugt vorgesehen, dass die erste und die weitere Wellenerzeugungsvorrichtung durch eine Trennwand voneinander getrennt sind. Die Trennwand kann einen begehbaren Steg aufweisen.

Wenn, wie dies einer bevorzugten Ausbildung entspricht, die erste und die wenigstens eine weitere Wellenerzeugungsvorrichtung nach dem gleichen Wellenerzeugungsprinzip arbeiten, umfasst auch die wenigstens eine weitere Wellenerzeugungsvorrichtung ein Wellenbecken und eine dem Wellenbecken vorgeordnete Rampe, über welche das Wasser in das Wellenbecken hinabfließt.

Die Erzeugung der stehenden Welle in dem Wellenbecken beruht dabei auf dem Prinzip, dass schnelles Wasser, welches die Rampe hinabfließt, auf das im Becken vorliegende langsame Wasser trifft. Um den Widerstand einstellen zu können, den das langsame Wasser dem schnellen Wasser entgegensetzt und um dadurch die Wellenausbildung beeinflussen zu können, ist bevorzugt vorgesehen, dass das Wellenbecken der ersten Wellenerzeugungsvorrichtung und/oder das Wellenbecken der wenigstens einen weiteren Wellenerzeugungsvorrichtung ein verstellbares Wehr zur Einstellung des Wasserstands im Becken aufweist. Das Wehr bildet hierbei vorzugsweise die flussabwärtige Begrenzung des Wellenbeckens. Das Wehr ist vorzugsweise als verschwenkbare Klappe ausgebildet, wobei der Wasserstand im Becken in Abhängigkeit vom Schwenkwinkel einstellbar ist. Die verschwenkbare Klappe ist weiters bevorzugt ausgebildet, um im Bedarfsfall in eine im Wesentlichen horizontale Lage geklappt zu werden, wodurch die Stauwirkung verloren geht und die Wellenbildung reduziert wird oder aufhört. Dadurch kann verunfallten oder gestürzten Benutzern der Anlage in einfacher Weise die Möglichkeit gegeben werden, das Wellenbecken zu verlassen.

Bevorzugt ist vorgesehen, dass die Rampe der ersten Wellenerzeugungsvorrichtung höher angeordnet ist als die Rampe der wenigstens einen weiteren Wellenerzeugungsvorrichtung. Bevorzugt ist vorgesehen, dass das Wellenbecken der ersten Wellenerzeugungsvorrichtung höher angeordnet ist als das Wellenbecken der wenigstens einen weiteren Wellenerzeugungsvorrichtung.

Die Fallhöhe der Rampe der wenigstens einen weiteren Wellenerzeugungsvorrichtung kann größer oder geringer sein als die Fallhöhe des Wellenbeckens der ersten Wellenerzeugungsvorrichtung.

Das Wellenbecken ist vorzugsweise mit einem rechteckigen Grundriss ausgebildet. Dabei ist die in Fließrichtung gemessene Länge des Beckens vorzugsweise größer als die quer dazu gemessene Breite des Beckens. Die Beckenbreite beträgt vorzugsweise 6-12m. Die Länge der in das Wellenbecken führenden Rampe beträgt vorzugsweise 1,5-3m. Die Beckenlänge beträgt vorzugsweise 7-10m. Die in das Wellenbecken führende Auflauffläche beträgt vorzugsweise 0,75-2m. Bevorzugt ist das Wellenbecken, insbesondere mit Hilfe des verstellbaren Wehrs, insbesondere der schwenkbaren Klappe, für einen Wasserstand von 0,4-1,5m ausgebildet. Das gesamte Länge der Surfanlage, d.h. die Gesamtlänge des Hauptbeckens kann 25-40m, bevorzugt ca. 30m betragen.

Um die Wellenform beeinflussen zu können, kann am unteren Ende der Auflauffläche z.B. ein Spoiler mit veränderbarem Anstellwinkel angeordnet sein.

Wenn die gesamte Wassermenge des Rücklaufs durch die wenigstens eine weitere Wellenerzeugungsvorrichtung geleitet wird, ist der Volumenstrom in der ersten und in der wenigstens einen weiteren Wellenerzeugungsvorrichtung gleich. Wenn jedoch das in der wenigstens einen weiteren Wellenerzeugungsvorrichtung nutzbare Wassergefälle geringer ist als in der ersten Wellenerzeugungsvorrichtung, kann es sinnvoll sein, die wenigstens eine weitere Wellenerzeugungsvorrichtung kleiner zu dimensionieren als die erste Wellenerzeugungsvorrichtung, damit trotz geringeren Gefälles eine zufriedenstellende Wellenbildung erfolgt. Insbesondere kann hierbei vorgesehen sein, dass die Breite und/oder Länge des Wellenbeckens der wenigstens einen weiteren Wellenerzeugungsvorrichtung geringer ist als die Breite bzw. Länge des Wellenbeckens der ersten Wellenerzeugungsvorrichtung.

Gemäß einer bevorzugten Ausführungsform der vorliegenden Erfindung ist die Surfanlage bevorzugt dahingehend weitergebildet, dass der Rücklauf zu beiden Seiten der ersten Wellenerzeugungsvorrichtung angeordnet ist und jeweils eine weitere Wellenerzeugungsvorrichtung zu beiden Seiten der ersten Wellenerzeugungsvorrichtung im Rücklauf angeordnet ist. Dies stellt eine weitere Verbesserung der Nutzungskapazität der erfindungsgemäßen Surfanlage dar und kann ohne Veränderungen des Grundkonzepts umgesetzt werden, um den Wirkungsgrad und die erzielbare Auslastung weiter zu verbessern.

Bis hierher wurden lediglich Wellenerzeugungsvorrichtungen offenbart, die geeignet sind, Wellen zu erzeugen, die im Wesentlichen orthogonal zur Fließrichtung des Wassers verlaufen. Es ist jedoch wünschenswert, auch Wellen simulieren zu können, die ähnlich natürlichen links- oder rechtsbrechenden Wellen von links nach rechts oder umgekehrt besurft werden. Zu diesem Zweck ist die Auflauffläche der ersten und/oder der wenigstens einen weiteren Wellenerzeugungsvorrichtung schräg gestellt bezüglich der Fließrichtung des Wasserkreislaufs, wie dies einer bevorzugten Ausführungsform der vorliegenden Erfindung entspricht. Das schnelle, die Rampe hinabfließende Wasser trifft in diesem bevorzugten Fall entlang einer schräg verlaufenden Front auf das langsame Wasser im Wellenbecken und bildet daher, je nachdem, ob die Auflauffläche nach links oder nach rechts schräg gestellt ist, eine nach links oder nach rechts schräg verlaufende Wellenfront, die auch dementsprechend weniger am Heck eines Surfbretts, sondern mehr auf den Rails besurft wird. Bevorzugt ist die Auflauffläche einer Wellenerzeugungsvorrichtung schräg bezüglich der Fließrichtung des Wasserkreislaufs einstellbar.

Um dem zunehmenden Bedarf an zum Wintersport alternativen Attraktionen in Wintersportgebieten gerecht zu werden, kann die vorliegende Erfindung bevorzugt auch dergestalt ausgeführt werden, dass die Surfanlage aus Schnee gefertigt ist. Bei entsprechenden Außenbedingungen ist der Kühlbedarf relativ gering, um den Schnee bzw. das daraus entstandene Eis zu erhalten, wobei sich aufgrund der anfänglichen Erosion des Schnees durch das darüber fließende Wasser mitunter vorteilhaft hydrodynamische Bedingungen in der Surfanlage einstellen und die Wellen, wie auch in der Natur, einer gewissen Variabilität unterliegen.

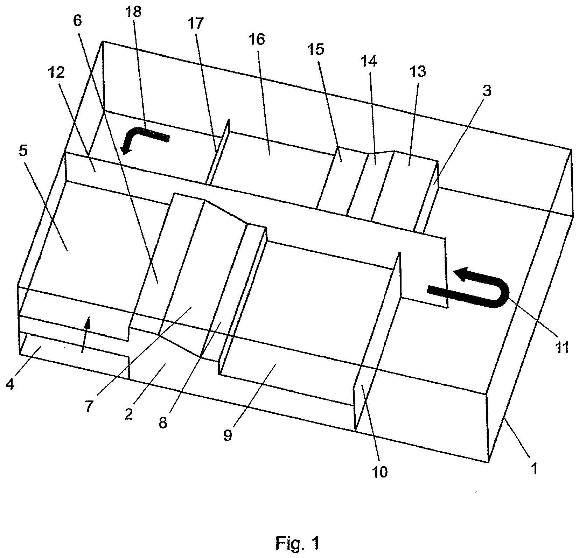

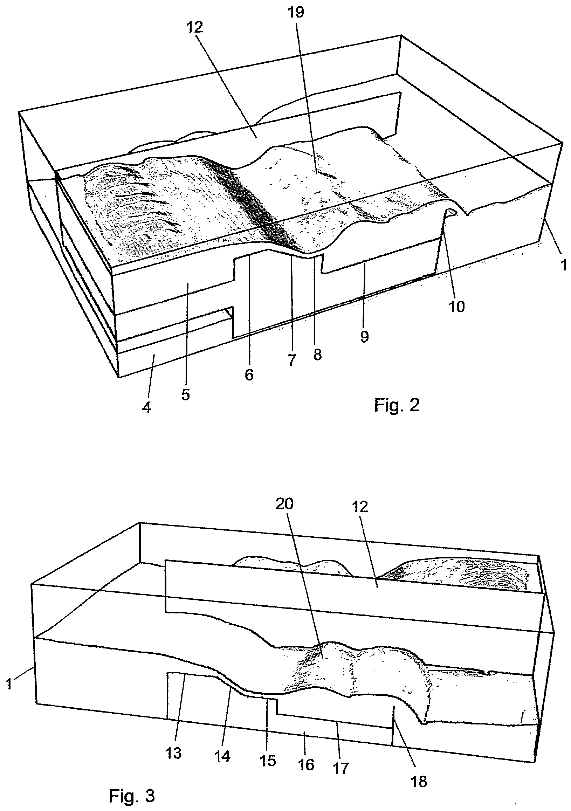

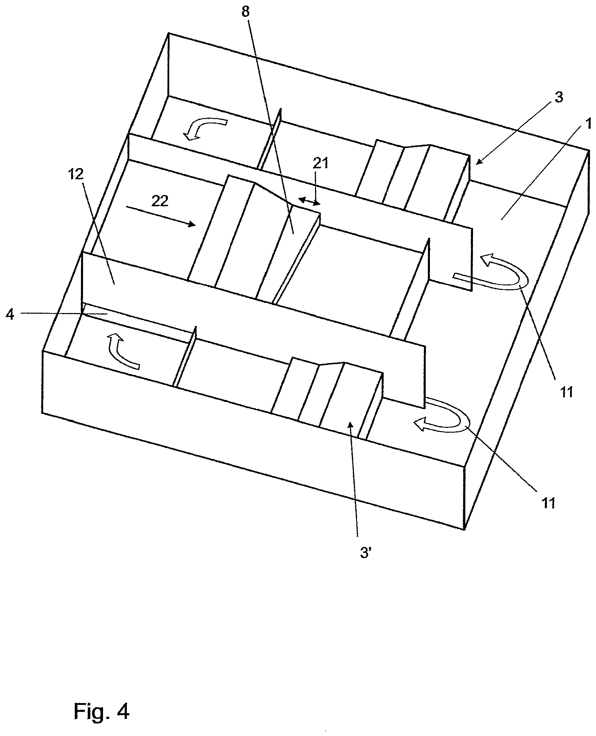

Die Erfindung wird nachfolgend anhand eines in der Zeichnung schematisch dargestellten Ausführungsbeispiels näher erläutert. In dieser zeigen Fig. 1 eine perspektivische Ansicht einer künstlichen Surfanlage, Fig. 2 die Surfanlage gemäß Fig. 1 mit einer Visualisierung des Wasserspiegelverlaufs in einer ersten Ansicht, Fig. 3 die Surfanlage gemäß Fig. 1 mit einer Visualisierung des Wasserspiegelverlaufs in einer zweiten Ansicht und Fig. 4 die Surfanlage mit einem Rücklauf zu beiden Seiten der ersten Wellenerzeugungsvorrichtung.

In Fig. 1 ist ein Hauptbecken mit 1 bezeichnet, welches im Betrieb mit Wasser befüllt ist. Im Hauptbecken 1 sind eine erste Wellenerzeugungsvorrichtung 2 und eine zweite Wellenerzeugungsvorrichtung 3 angeordnet. Das im Hauptbecken 1 angeordnete Wasser wird mit Hilfe einer Mehrzahl von nicht dargestellten Pumpen aus einem flussaufwärts der ersten Wellenerzeugungsvorrichtung 2 angeordneten Einsaugbereich 4 entsprechend dem Pfeil in ein Sammelbecken 5 der ersten Wellenerzeugungsvorrichtung 2 hinaufgepumpt. Von dort fließt das Wasser über den Einlaufbereich 6, die Rampe 7 und eine unmittelbar an die Rampe 7 anschließende Auflauffläche 8 in das Wellenbecken 9. Das Wellenbecken wird flussabwärts von einer schwenkbaren Klappe 10 begrenzt. Das über die schwenkbare Klappe 10 abfließende Wasser wird entsprechend dem Pfeil 11 um 180° umgeleitet und fließt zu der von der ersten Wellenerzeugungsvorrichtung 2 über eine Trennwand 12 abgetrennten zweiten Wellenerzeugungsvorrichtung 3. Die einzelnen Abschnitte der zweiten Wellenerzeugungsvorrichtung 3 liegen tiefer als die entsprechenden Abschnitte der ersten Wellenerzeugungsvorrichtung 2. Die zweite Wellenerzeugungsvorrichtung 3 ist gleich aufgebaut wie die erste Wellenerzeugungsvorrichtung 2 und umfasst daher einen Einlaufbereich 13, eine Rampe 14, eine unmittelbar an die Rampe 14 anschließende Auflauffläche 15 und das Wellenbecken 16. Das Wellenbecken 16 ist flussabwärtig von einer schwenkbaren Klappe 17 begrenzt. Das über die schwenkbare Klappe 17 abfließende Wasser gelangt gemäß dem Pfeil 18 in den Einsaugbereich 4 der Pumpen, der sich unterhalb des Sammelbeckens 5 befindet.

Um das Aussteigen der Benutzer aus dem Wellenbecken 9 zu erleichtern, kann im Wellenbecken 9 eine Austeighilfe, wie z.B. ein schräg zum Beckenrand oder zum Wehr 17 hinauf führendes, wasserdurchlässiges Steiggitter, angeordnet sein.

In den Fig. 2 und 3 ist eine Visualisierung des Wassers gezeigt, wobei ersichtlich ist, dass das Wasser im Wellenbecken 9 der ersten Wellenerzeugungsvorrichtung 2 eine stehende Welle 19 und in der zweiten Wellenerzeugungsvorrichtung 3 eine stehende Welle 20 ausbildet.

In Fig. 4 sind gleiche Teile mit gleichen Bezugszeichen bezeichnet und es ist zu erkennen, dass das aus dem Hauptbecken 1 abfließende Wasser entsprechend der beiden Pfeile 11 nach beiden Seiten um 180° umgelenkt und in Rückläufe zu beiden Seiten der ersten Wellenerzeugungsvorrichtung 2 geleitet wird. Dort ist jeweils eine Wellenerzeugungsvorrichtung 3 und 3' zu beiden Seiten der ersten Wellenerzeugungsvorrichtung 2 angeordnet. Die beiden Wellenerzeugungsvorrichtungen 3 und 3' sind im in Fig. 4 gezeigten Beispiel gleich ausgelegt, diese können sich jedoch in ihrer Geometrie voneinander unterscheiden, um unterschiedliche Wellencharakteristika zu erzielen.

In Fig. 4 ist weiters zu erkennen, dass die Auflauffläche 8 der ersten Wellenerzeugungsvorrichtung 2 gegenüber der mit dem Pfeil 21 versinnbildlichten Fließrichtung des Wasserkreislaufs schräg gestellt ist und darüberhinaus entsprechend dem Pfeil 22 schräg einstellbar ist, um Wellen zu erzeugen, die natürlichen links- bzw. rechtsbrechenden Wellen gleichen.

## Patentansprüche

1. Künstliche Surfanlage zur Erzeugung einer stehenden Welle umfassend einen Wasserkreislauf, in dem eine erste Wellenerzeugungsvorrichtung (2) angeordnet ist, die ein Wellenbecken und eine dem Wellenbecken (9) vorgeordnete Rampe (7) umfasst, über welche das Wasser in das Wellenbecken (9) hinabfließt, wobei der Wasserkreislauf flussabwärts des Wellenbeckens (9) der ersten Wellenerzeugungsvorrichtung (2) einen Wasserrücklauf aufweist, über welchen das Wasser einer Pumpe zur Verfügung gestellt wird, mit welcher das Wasser aus dem Rücklauf zu der ersten Wellenerzeugungsvorrichtung (2) hinauf förderbar ist, **dadurch gekennzeichnet, dass** im Rücklauf wenigstens eine weitere Wellenerzeugungsvorrichtung (3) angeordnet ist, zu welcher das aus der ersten Wellenerzeugungsvorrichtung (2) kommende Wasser fließt.

2. Surfanlage nach Anspruch 1, **dadurch gekennzeichnet, dass** der Wasserkreislauf zwischen der ersten Wellenerzeugungsvorrichtung (2) und der wenigstens einen weiteren Wellenerzeugungsvorrichtung (3) Umlenkmittel zur Umlenkung des Wassers um wenigstens 90°, insbesondere um ca. 180°, aufweist.

3. Surfanlage nach Anspruch 1 oder 2, **dadurch gekennzeichnet, dass** die erste Wellenerzeugungsvorrichtung (2) und die weitere Wellenerzeugungsvorrichtung (3) nebeneinander angeordnet sind.

4. Surfanlage nach Anspruch 3, **dadurch gekennzeichnet, dass** die erste und die weitere Wellenerzeugungsvorrichtung (2, 3) durch eine Trennwand (12) voneinander getrennt sind.

5. Surfanlage nach einem der Ansprüche 1 bis 4, **dadurch gekennzeichnet, dass** die wenigstens eine weitere Wellenerzeugungsvorrichtung (3) ein Wellenbecken (16) und eine dem Wellenbecken (16) vorgeordnete Rampe (14) umfasst, über welche das Wasser in das Wellenbecken (16) hinabfließt.

6. Surfanlage nach einem der Ansprüche 1 bis 5, **dadurch gekennzeichnet, dass** das Wellenbecken (9) der ersten Wellenerzeugungsvorrichtung (2) und/oder das Wellenbecken (16) der wenigstens einen weiteren Wellenerzeugungsvorrichtung (3) ein verstellbares Wehr, insbesondere eine verschwenkbare Klappe (10, 17) zur Einstellung des Wasserstands im Becken (9, 16) aufweist.

7. Surfanlage nach einem der Ansprüche 1 bis 6, **dadurch gekennzeichnet, dass** die Breite und/oder Länge des Wellenbeckens (16) der wenigstens einen weiteren Wellenerzeugungsvorrichtung (16) geringer ist als die Breite bzw. Länge des Wellenbeckens (9) der ersten Wellenerzeugungsvorrichtung (2).

8. Surfanlage nach einem der Ansprüche 1 bis 7, **dadurch gekennzeichnet, dass** ein Rücklauf zu beiden Seiten der ersten Wellenerzeugungsvorrichtung (2) angeordnet ist und jeweils eine weitere Wellenerzeugungsvorrichtung (3, 3') zu beiden Seiten der ersten Wellenerzeugungsvorrichtung (2) im Rücklauf angeordnet ist.

9. Surfanlage nach einem der Ansprüche 1 bis 8, **dadurch gekennzeichnet, dass** die Auflauffläche (8) der ersten und/oder der wenigstens einen weiteren Wellenerzeugungsvorrichtung (2, 3, 3')schräg bezüglich der Fließrichtung des Wasserkreislaufs gestellt ist.

10. Surfanlage nach einem der Ansprüche 1 bis 9, **dadurch gekennzeichnet, dass** die Surfanlage (1) aus Schnee gefertigt ist.

## Claims

1. Artificial surfing system for generating a standing wave comprising a water circuit in which a first wave generating device (2) is arranged, which comprises a wave pool and a ramp (7) arranged upstream of the wave pool (9), over which the water flows down into the wave pool (9), wherein the water circuit downstream of the wave pool (9) of the first wave generating device (2) comprises a water backflow, via which the water is made available to a pump with which the water can be conveyed from the backflow upwards to the first wave generating device (2), **characterized in that** at least one further wave generating device (3) is arranged in the backflow, to which the water coming from the first wave generating device (2) flows.

2. Surfing system according to claim 1, **characterized in that** the water circuit between the first wave generating device (2) and the at least one further wave generating device (3) comprises deflecting means for deflecting the water by at least 90°, in particular by approximately 180°.

3. Surfing system according to claim 1 or 2, **characterized in that** the first wave generating device (2) and the further wave generating device (3) are arranged side by side.

4. Surfing system according to claim 3, **characterized in that** the first and the further wave generating device (2, 3) are separated from one another by a partition wall (12).

5. Surfing system according to any one of claims 1 to 4, **characterized in that** the at least one further wave generating device (3) comprises a wave pool (16) and a ramp (14) arranged upstream of the wave pool (16), over which the water flows down into the wave pool (16).

6. Surfing system according to any one of claims 1 to 5, **characterized in that** the wave pool (9) of the first wave generation device (2) and/or the wave pool (16) of the at least one further wave generation device (3) comprises an adjustable weir, in particular a pivotable flap (10, 17) for adjusting the water level in the pool (9, 16).

7. Surfing system according to any one of claims 1 to 6, **characterized in that** the width and/or length of the wave pool (16) of the at least one further wave generating device (16) is less than the width or length of the wave pool (9) of the first wave generating device (2).

8. Surfing system according to any one of claims 1 to 7, **characterized in that** a backflow is arranged on both sides of the first wave generating device (2) and in each case a further wave generating device (3, 3') is arranged in the backflow on both sides of the first wave generating device (2).

9. Surfing system according to any one of claims 1 to 8, **characterized in that** an impact surface (8) of the first and/or the at least one further wave generating device (2, 3, 3') is set obliquely with respect to the flow direction of the water circuit.

10. Surfing system according to any one of claims 1 to 9, **characterized in that** the surfing system (1) is made of snow.

## Revendications

1. Installation de formation de vagues artificielles de surf pour la production d'une vague stationnaire comprenant un circuit d'eau dans lequel est agencé un premier dispositif de production de vagues (2), qui comprend un bassin à vagues et une rampe (7) agencée en amont du bassin à vagues (9), au moyen de laquelle l'eau s'écoule dans le bassin à vagues (9), le circuit d'eau comportant, en aval du bassin à vagues (9) du premier dispositif de production de vagues (2), un retour d'eau, par lequel l'eau est fournie à une pompe, avec laquelle l'eau peut être acheminée du retour vers le premier dispositif de production de vagues (2), **caractérisée en ce qu'**au moins un autre dispositif de production de vagues (3), vers lequel s'écoule l'eau provenant du premier dispositif de production de vagues (2), est agencé dans le retour.

2. Installation de formation de vagues de surf selon la revendication 1, **caractérisée en ce que** le circuit d'eau entre le premier dispositif de production de vagues (2) et l'au moins un autre dispositif de production de vagues (3) comprend des moyens de déviation pour dévier l'eau sur au moins 90°, en particulier sur environ 180°.

3. Installation de formation de vagues de surf selon la revendication 1 ou 2, **caractérisée en ce que** le premier dispositif de production de vagues (2) et l'autre dispositif de production de vagues (3) sont disposés côte à côte.

4. Installation de formation de vagues de surf selon la revendication 3, **caractérisée en ce que** le premier et l'autre dispositif de production de vagues (2, 3) sont séparés l'un de l'autre par une cloison (12).

5. Installation de formation de vagues de surf selon l'une des revendications 1 à 4, **caractérisée en ce que** l'au moins un autre dispositif de production de vagues (3) comprend un bassin à vagues (16) et une rampe (14) agencée en amont du bassin à vagues (16), au moyen de laquelle l'eau s'écoule dans le bassin à vagues (16).

6. Installation de formation de vagues de surf selon l'une des revendications 1 à 5, **caractérisée en ce que** le bassin à vagues (9) du premier dispositif de production de vagues (2) et/ou le bassin à vagues (16) de l'au moins un autre dispositif de production de vagues (3) comprend un déversoir réglable, en particulier un clapet pivotant (10, 17) pour régler le niveau d'eau dans le bassin (9, 16).

7. Installation de formation de vagues de surf selon l'une des revendications 1 à 6, **caractérisée en ce que** la largeur et/ou la longueur du bassin à vagues (16) de l'au moins un autre dispositif de production de vagues (16) est inférieure à la largeur respectivement à la longueur du bassin à vagues (9) du premier dispositif de production de vagues (2).

8. Installation de formation de vagues de surf selon l'une des revendications 1 à 7, **caractérisée en ce qu'**un retour est prévu sur les deux côtés du premier dispositif de production de vagues (2) et un autre dispositif de production de vagues (3, 3') est respectivement prévu sur les deux côtés du premier dispositif de production de vagues (2) dans le retour.

9. Installation de formation de vagues de surf selon l'une des revendications 1 à 8, **caractérisée en ce que** la surface de rampe (8) du premier et/ou de l'au moins un autre dispositif de production de vagues (2, 3, 3') est placé obliquement par rapport au sens d'écoulement du circuit d'eau.

10. Installation de formation de vagues de surf selon l'une des revendications 1 à 9, **caractérisée en ce que** l'installation de formation de vagues de surf (1) est faite de neige.
